# EUROPÄISCHE PATENTSCHRIFT

(11) **EP 2 998 717 B1**
(45) Veröffentlichungstag und Bekanntmachung des Hinweises auf die Patenterteilung: **09.08.2017**
(21) Anmeldenummer: 15173116.3
(22) Anmeldetag: 22.06.2015
(51) Int. Cl.: G01M 5/00, G01B 5/30

(54) **VORRICHTUNG ZUR ERFASSUNG VON VERFORMUNGEN EINES ROTORBLATTS UND VERFAHREN ZUR MONTAGE EINER DERARTIGEN VORRICHTUNG**
DEVICE FOR DETECTING THE DEFORMATION OF A ROTOR BLADE AND A METHOD FOR ASSEMBLING SUCH A DEVICE
DISPOSITIF DE DÉTECTION DE DÉFORMATIONS D'UNE PALE DE ROTOR ET PROCÉDÉ DE MONTAGE D'UN TEL DISPOSITIF

(30) Priorität: 16.09.2014 DE 102014218518
(43) Veröffentlichungstag der Anmeldung: 23.03.2016
(73) Patentinhaber: Dr. Johannes Heidenhain GmbH, 83301 Traunreut (DE)
(72) Erfinder: MEYER, Hermann, 83458 Schneizlreuth (DE); SIGL, Thomas, 83071 Stephanskirchen (DE)

(56) Entgegenhaltungen:
- EP-A1- 2 876 406
- WO-A1-2013/045610
- DE-A1-102008 007 913
- DE-U1- 29 720 741

## Beschreibung

### GEBIET DER TECHNIK

Die Erfindung betrifft eine Vorrichtung zur Erfassung von Verformungen eines Rotorblatts einer Windkraftanlage gemäß dem Patentanspruch 1 sowie ein entsprechend ausgestaltetes Verfahren zur Montage einer derartigen Vorrichtung gemäß dem Patentanspruch 8.

Rotorblätter von Windkraftanlagen sind verschiedensten Kräften ausgesetzt, die naturgemäß zu Verformungen der Rotorblätter führen und diese gegebenenfalls zu Schwingungen anregen. Schon alleine die Gewichtskraft eines umlaufenden Rotorblattes erzeugt eine periodische Verformung des betreffenden Rotorblattes. Diese Verformungen werden überlagert durch weitere Verformungen, die unter anderem aus den aerodynamischen Lasten resultieren. Beispielsweise hängen die aerodynamische Lasten vom Höhenprofil der Windgeschwindigkeit in Kombination mit Windböen oder Windturbulenzen ab. Ebenso wird bei jedem Umlauf durch den Turmvorstau eine pulsierende Kraft in das Rotorblatt eingeleitet. Das Ausmaß der Verformungen von Rotorblättern einer Windenergieanlage ist jedenfalls nur schwer voraussagbar, weshalb Anstrengungen unternommen werden, diese als Ist-Werte zu erfassen.

Im Hinblick auf die Vorhersage von Ermüdungsschäden kann es vorteilhaft sein auf Basis der gemessenen Verformungen beziehungsweise Belastungen eine Information rückschauend über eine akkumulierte Belastung des Rotorblatts zu einem gewünschten Zeitpunkt zu erzeugen. Die Verfügbarkeit von derartigen Belastungswerten ist also im Hinblick auf kurzzeitige maximale Belastungen oder zu erwartende Ermüdungsschäden von Bedeutung. Außerdem kann in Kenntnis der Ist-Verformungen beziehungsweise Ist-Lasten die Regelung der Windkraftanlage optimiert werden, beispielsweise durch Verstellung der Pitch-Winkel.

### STAND DER TECHNIK

Aus der DE 19847982 A1 ist eine Vorrichtung zur Erfassung von Schwingungen eines Rotorblattes einer Windkraftanlage bekannt, durch die unter Nutzung eines Abstandssensors als Linearelement eine Verformung des Rotorblattes festgestellt werden. Elemente der Vorrichtung werden mit Hilfe einer Klebefuge an einer Blattwandung befestigt. In der oben genannten Offenlegungsschrift wird einleitend darauf hingewiesen, dass Klebstellen handwerklich nur sehr aufwändig an bestehenden Rotorblättern nachzurüsten sind.

Gemäß der Gebrauchsmusterschrift DE 297 20 741 U1 wird mit Hilfe eines Abstandssensors eine lineare Relativbewegung zweier Klötze erfasst, welche mit der Rotorblattwandung verklebt sind.

In der WO2013/045610 A1 ist eine Vorrichtung zum Erfassen eines Abstandswertes gezeigt, welche einen Träger aufweist, der infolge von Rotorblattdeformationen verformt wird, wobei die Verformungen des Trägers durch einen verformungssensitiven Sensor gemessen werden. Entsprechende Montagebauteile sind mit dem Rotorblatt verklebt.

Das Dokument EP 2 876 406 A1 der Anmelderin, welches nach dem Anmeldetag dieses Patents veröffentlicht wurde, offenbart eine Vorrichtung zum Messen von Rotorblattverformungen, welche an die Innenseite eines Rotorblattes geklebt werden kann.

### ZUSAMMENFASSUNG DER ERFINDUNG

Der Erfindung liegt die Aufgabe zugrunde, eine Vorrichtung zur Erfassung von Verformungen eines Rotorblatts einer Windkraftanlage zu schaffen, welche vergleichsweise einfach und präzise am Rotorblatt montiert werden kann, insbesondere auch bei beengten Platzverhältnissen und schwierigen Montagelagen.

Weiterhin wird durch die Erfindung ein Verfahren zur einfachen und präzisen Montage einer derartigen Vorrichtung an einem Rotorblatt geschaffen.

Diese Aufgabe wird erfindungsgemäß durch die Vorrichtung mit den Merkmalen des Patentanspruchs 1 beziehungsweise durch ein Verfahren mit den Merkmalen des Patentanspruchs 8 gelöst.

Demnach umfasst die Vorrichtung zur Erfassung von Verformungen eines Rotorblatts einer Windkraftanlage eine Positionsmesseinrichtung, welche eine erste und eine zweite Bauteilgruppe aufweist, sowie einen Arm. Die erste Bauteilgruppe der Positionsmesseinrichtung ist relativ zur zweiten Bauteilgruppe bewegbar beziehungsweise um eine Achse schwenkbar angeordnet, wobei durch die Positionsmesseinrichtung die relative Position zwischen der ersten und der zweiten Bauteilgruppe messbar ist. Der Arm ist mechanisch mit der ersten Bauteilgruppe gekoppelt und weist eine erste Klebefläche auf, die derart ausgestaltet ist, dass der Arm an dieser ersten Klebefläche dauerhaft mit dem Rotorblatt verbindbar beziehungsweise verklebbar ist. Die zweite Bauteilgruppe weist eine zweite Klebefläche auf, die so ausgestaltet ist, dass die zweite Bauteilgruppe mit dem Rotorblatt dauerhaft verbindbar beziehungsweise verklebbar ist. An der zweiten Bauteilgruppe und am Arm ist ein erstes Montageelement fixiert. Die Vorrichtung zur Erfassung von Verformungen eines Rotorblatts weist weiterhin ein zweites Montageelement auf, wobei das erste Montageelement lösbar mit dem zweiten Montageelement verbunden werden kann und das zweite Montageelement so ausgestaltet ist, dass dieses am Rotorblatt haftend befestigbar ist.

Die Vorrichtung zur Erfassung von Verformungen eines Rotorblatts umfasst also mindestens ein Paar von Montagelementen, welches das erste Montageelement und das zweite Montageelement umfasst. Zum Lösen des einen Paars oder wenn die Vorrichtung mehrere Paare von Montagelementen aufweist, zum Lösen der mehreren Paare, ist naturgemäß eine bestimmte Kraft erforderlich. Die Montagelemente sind mit Vorteil so ausgebildet, dass die Kraft zum Lösen größer ist als die Gewichtskraft der Vorrichtung zur Erfassung von Verformungen eines Rotorblatts. Auf diese Weise kann ohne weitere Hilfsmittel eine Über-Kopf-Montage der Vorrichtung am Rotorblatt vorgenommen werden.

In weiterer Ausgestaltung der Erfindung weist das zweite Montageelement eine Klebeschicht auf, so dass mit Hilfe der Klebeschicht das zweite Montageelement am Rotorblatt haftend befestigbar ist. Auch die durch die Klebe-Mit Vorteil ist der Arm aus einem Material hergestellt, welches Kunststoff umfasst. Der Kunststoff kann insbesondere faserverstärkt sein, z. B. durch Glas- und / oder Kohlefasern.

In weiterer Ausgestaltung der Erfindung ist die erste Bauteilgruppe gelenkig mit dem Arm verbunden, insbesondere über ein biegeweiches Bauelement, welches als Festkörpergelenk beziehungsweise als ein einstückiges Gelenk ausgestaltet sein kann.

Mit Vorteil weist die Positionsmesseinrichtung ein Wälzlager oder mehrere Wälzlager zur schwenkbaren Lagerung der ersten Bauteilgruppe relativ zur zweiten Bauteilgruppe auf. Eine derartige Lagerung dient dann auch zur Führung des Arms. Alternativ kann auch ein Gleitlager oder ein Festköpergelenk zur schwenkbaren Lagerung der ersten Bauteilgruppe relativ zur zweiten Bauteilgruppe verwendet werden.

Gemäß einer Weiterbildung der Erfindung weist die Positionsmesseinrichtung eine Maßverkörperung und ein Element zur Abtastung der Maßverkörperung auf. Die Maßverkörperung kann ringförmig ausgestaltet sein und ist dann geometrisch betrachtet ein Hohlzylinder mit umlaufenden Mantelseiten. Die Mantelseiten können eine geringe Höhe aufweisen, so dass die Maßverkörperung als Ringscheibe ausgestaltet ist mit ringförmigen parallel zueinander ausgerichteten Stirnflächen, die auch als Grund- oder Deckflächen bezeichnet werden können. Die Winkelskalierung oder Winkelcodierung kann auf einer der Stirnflächen aufgebracht sein.

Gerade wenn die Maßverkörperung so ausgestaltet ist, dass die Mantelseiten eine vergleichsweise größere Höhe aufweist, also bei einer eher trommelförmigen Maßverkörperung, kann die Winkelskalierung auf der Mantelseite aufgebracht sein. Die Maßverkörperung kann aber auch als Maßband ausgestaltet sein, welches beispielsweise an der Mantelseite eines zylindrischen Körpers an dessen Außenseite oder an dessen Innenseite befestigt wird.

Zudem kann die Maßverkörperung so ausgestaltet sein, dass diese nur über einen begrenzten Winkelbereich eine Skalierung aufweist, sich also nicht über 360° erstreckt, sondern nur ein Winkelsegment als Messbereich aufweist. Die winkelmäßige Erstreckung der Maßverkörperung kann auf den maximalen Messbereich beziehungsweise Schwenkwinkel abgestimmt sein.

Alternativ kann die Positionsmesseinrichtung eine Maßverkörperung und ein Element zur Abtastung der Maßverkörperung aufweisen, die dazu ausgebildet sind eine lineare Verschiebung zueinander zu messen. Die Maßverkörperung kann demnach linear ausgestaltet sein und an dem Arm befestigt oder direkt auf diesem aufgebracht sein.

Mit Vorteil ist das Element zur Abtastung der Maßverkörperung photosensitiv beziehungsweise lichtempfindlich ausgestaltet. Demgemäß beruht also eine derartige Abtastung auf einem optischen Prinzip.

Alternativ kann die Abtastung auf einem induktiven oder magnetischen Prinzip beruhen.

Die Positionsmesseinrichtung kann insbesondere digitale Positionssignale und / oder Signale, die durch ein- oder mehrmaliges differenzieren der Positionssignale nach der Zeit erzeugt worden sind, liefern. Die Übertragung der betreffenden Signale kann rein digital und seriell erfolgen, so dass eine vergleichsweise einfache Verarbeitung der Signale möglich ist, z. B. zur Einbindung in eine hochdynamische Regelung.

Die Positionsmesseinrichtung weist mit Vorteil eine Maßverkörperung mit einer absoluten Codierung auf, so dass durch die Positionsmesseinrichtung die relative Position (Winkellage oder lineare Verschiebung) zwischen der ersten und der zweiten Bauteilgruppe als eine absolute Größe messbar ist (im Gegensatz zu einer inkrementalen Messung). Auf diese Weise kann zu beliebigen Zeitpunkten die absolute Verformung des Rotorblatts gemessen werden. Dies ist insbesondere zur Überprüfung von Setzungsvorgängen in der Struktur des Rotorblatts vorteilhaft. Für eine derartige Überprüfung wird das betreffende Rotorblatt außerhalb des eigentlichen Betriebs in eine waagrechte Stellung gefahren. Danach wird die Verformung in dieser Position gemessen. Wenn nun eine absolut arbeitende Positionsmesseinrichtung verwendet wird, kann der absolute Messwert direkt mit vorhergegangenen (ebenfalls absoluten) Messungen verglichen werden.

Ein weiterer Aspekt der Erfindung betrifft ein Rotorblatt einer Windkraftanlage mit einer Vorrichtung zur Erfassung von Verformungen. Diese Vorrichtung umfasst ihrerseits eine Positionsmesseinrichtung, welche eine erste und eine zweite Bauteilgruppe aufweist, und einen Arm. Die erste Bauteilgruppe der Positionsmesseinrichtung ist relativ zur zweiten Bauteilgruppe bewegbar beziehungsweise um eine Achse schwenkbar angeordnet, wobei durch die Positionsmesseinrichtung die relative Position zwischen der ersten und der zweiten Bauteilgruppe messbar ist. Der Arm ist mechanisch mit der ersten Bauteilgruppe gekoppelt und weist eine erste Klebefläche auf, wobei der Arm an dieser ersten Klebefläche dauerhaft mit dem Rotorblatt verbunden ist. Die zweite Bauteilgruppe weist eine zweite Klebefläche auf, durch welche die zweite Bauteilgruppe mit dem Rotorblatt dauerhaft verbunden ist. An der zweiten Bauteilgruppe und / oder am Arm ist ein erstes Montageelement fixiert. Die Vorrichtung zur Erfassung von Verformungen eines Rotorblatts weist weiterhin ein zweites Montageelement auf, wobei das erste Montageelement lösbar mit dem zweiten Montageelement verbunden werden kann und das zweite Montageelement so ausgestaltet ist, dass dieses am Rotorblatt haftend befestigt ist.

In weiterer Ausgestaltung des Rotorblatts weist das Rotorblatt mehrere Vorrichtungen zur Erfassung von Verformungen auf.

Mit Vorteil ist der Arm in Längsrichtung des Rotorblatts orientiert, wobei das Rotorblatt (zumindest im Bereich seiner Wurzel) eine zentrale sich in Längsrichtung erstreckende Längsachse aufweist.

Sofern die Positionsmesseinrichtung als Winkelmesseinrichtung ausgestaltet ist, kann die (Schwenk-) Achse der Positionsmesseinrichtung im Wesentlichen orthogonal zur Längsrichtung des Rotorblatts ausgerichtet sein. Dabei kann die Positionsmesseinrichtung so angeordnet sein, dass die Achse im Wesentlichen parallel zur Innenwand des Rotorblatts orientiert ist, oder so angeordnet sein, dass die Achse im Wesentlichen orthogonal zur Innenwand verwendet wird, kann der absolute Messwert direkt mit vorhergegangenen (ebenfalls absoluten) Messungen verglichen werden.

Ein weiterer Aspekt der Erfindung betrifft ein Rotorblatt einer Windkraftanlage mit einer Vorrichtung zur Erfassung von Verformungen. Diese Vorrichtung umfasst ihrerseits eine Positionsmesseinrichtung, welche eine erste und eine zweite Bauteilgruppe aufweist, und einen Arm. Die erste Bauteilgruppe der Positionsmesseinrichtung ist relativ zur zweiten Bauteilgruppe bewegbar beziehungsweise um eine Achse schwenkbar angeordnet, wobei durch die Positionsmesseinrichtung die relative Position zwischen der ersten und der zweiten Bauteilgruppe messbar ist. Der Arm ist mechanisch mit der ersten Bauteilgruppe gekoppelt und weist eine erste Klebefläche auf, wobei der Arm an dieser ersten Klebefläche dauerhaft mit dem Rotorblatt verbunden ist. Die zweite Bauteilgruppe weist eine zweite Klebefläche auf, durch welche die zweite Bauteilgruppe mit dem Rotorblatt dauerhaft verbunden ist. An der zweiten Bauteilgruppe und am Arm ist ein erstes Montageelement fixiert. Die Vorrichtung zur Erfassung von Verformungen eines Rotorblatts weist weiterhin ein zweites Montageelement auf, wobei das erste Montageelement lösbar mit dem zweiten Montageelement verbunden werden kann und das zweite Montageelement so ausgestaltet ist, dass dieses am Rotorblatt haftend befestigt ist.

In weiterer Ausgestaltung des Rotorblatts weist das Rotorblatt mehrere Vorrichtungen zur Erfassung von Verformungen auf.

Mit Vorteil ist der Arm in Längsrichtung des Rotorblatts orientiert, wobei das Rotorblatt (zumindest im Bereich seiner Wurzel) eine zentrale sich in Längsrichtung erstreckende Längsachse aufweist.

Sofern die Positionsmesseinrichtung als Winkelmesseinrichtung ausgestaltet ist, kann die (Schwenk-) Achse der Positionsmesseinrichtung im Wesentlichen orthogonal zur Längsrichtung des Rotorblatts ausgerichtet sein. Dabei kann die Positionsmesseinrichtung so angeordnet sein, dass die Achse im Wesentlichen parallel zur Innenwand des Rotorblatts orientiert ist, oder so angeordnet sein, dass die Achse im Wesentlichen orthogonal zur Innenwand lösbar vor dem Befestigen des zweiten Montageelements an dem Rotorblatt mit dem ersten Montageelement verbunden. Vor dem Aufbringen des Klebers
- wird die Vorrichtung an das Rotorblatt gedrückt, so dass das zweite Montageelement am Rotorblatt mit Hilfe der Klebeschicht haftet,
- wird die Vorrichtung zum darauffolgenden Aufbringen des Klebers wieder vom Rotorblatt entfernt.

Nach dem Aufbringen des Klebers wird die Vorrichtung am Rotorblatt durch Zusammenfügen des ersten Montageelements mit dem zweiten Montageelement wieder befestigt, wobei der Kleber sowohl mit der ersten und der zweiten Klebefläche als auch mit dem Rotorblatt in Kontakt ist. Die Vorrichtung ist dadurch so ausgestaltet, dass sich stets reproduzierbar eine vorgegebene Dicke der Schicht des Klebers einstellt.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

### KURZE BESCHREIBUNG DER ZEICHNUNGEN

- Figur 1: eine perspektivische Ansicht der Vorrichtung zur Erfassung von Verformungen eines Rotorblatts in einer ersten Montagephase,
- Figur 2: eine perspektivische Ansicht der Vorrichtung zur Erfassung von Verformungen eines Rotorblatts in einer zweiten Montagephase,
- Figur 3: eine perspektivische Ansicht der Vorrichtung zur Erfassung von Verformungen eines Rotorblatts in einer dritten Montagephase,
- Figur 4: eine Schnittansicht der Vorrichtung zur Erfassung von Verformungen eines Rotorblatts,
- Figur 5: eine Seitenansicht eines Details der Vorrichtung,
- Figur 6: eine schematische Ansicht eines Rotorblatts mit Vorrichtungen zur Erfassung von Verformungen.

### BESCHREIBUNG DER AUSFÜHRUNGSFORMEN

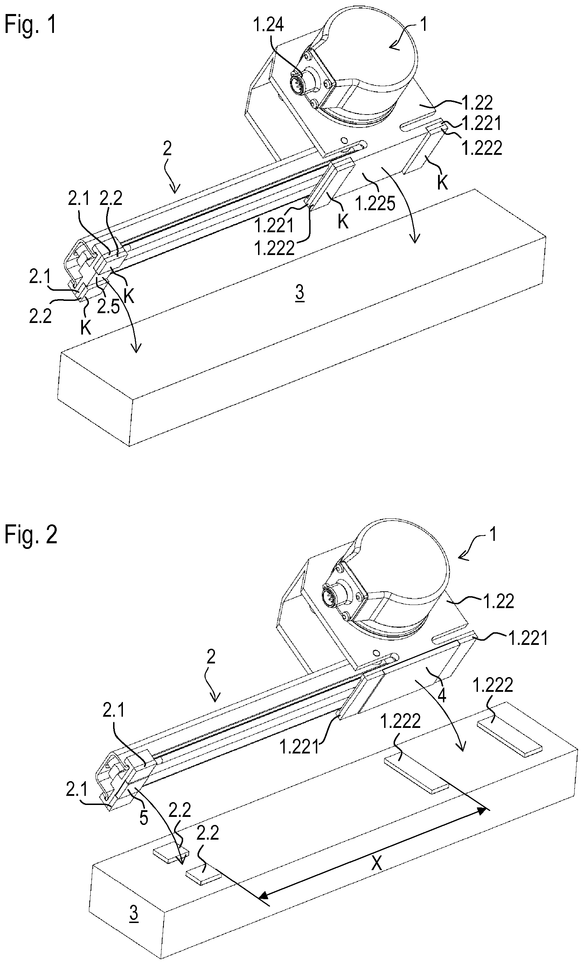

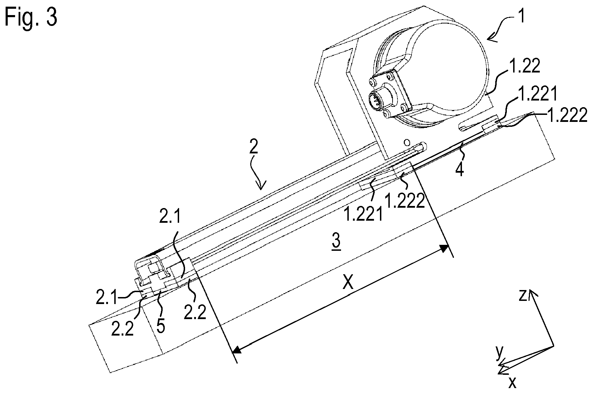

In der Figur 1 ist eine Vorrichtung zur Erfassung von Verformungen eines Rotorblatts 3 einer Windkraftanlage gezeigt, wobei in den Figuren 1 bis 4 nur ein quaderförmiger Ausschnitt des Rotorblatts 3 dargestellt ist. Das entsprechende Rotorblatt 3 ist im vorgestellten Ausführungsbeispiel Bestandteil einer Windkraftanlage mit horizontaler Achse, die insbesondere insgesamt drei Rotorblätter 3 aufweist. Die betreffende Vorrichtung zur Erfassung von Verformungen des Rotorblatts 3 umfasst eine Positionsmesseinrichtung 1, hier eine Winkelmesseinrichtung, und einen Arm 2.

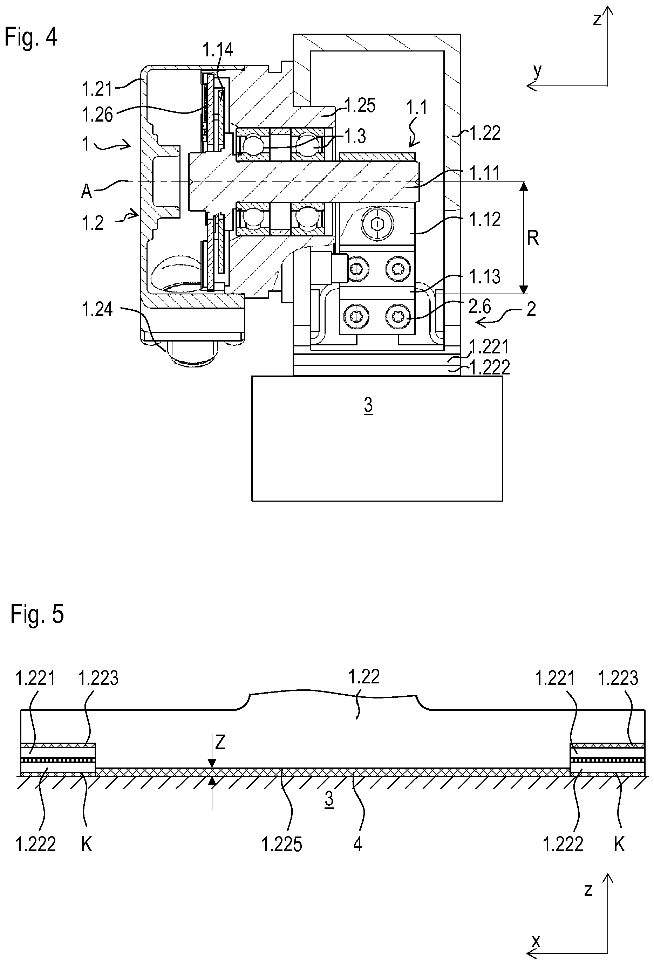

Die gezeigte Positionsmesseinrichtung 1 umfasst eine erste Bauteilgruppe 1.1 und eine zweite Bauteilgruppe 1.2. Die erste Bauteilgruppe 1.1 weist eine Welle 1.11 mit einem Absatz auf (Figur 4), an dem eine Maßverkörperung 1.14, z. B. durch eine Klebung, fest und nur mit geringen Toleranzabweichungen zentrisch bezüglich einer Achse A verbunden ist. Die Achse A erstreckt sich in y-Richtung. Die Maßverkörperung 1.14 besteht im vorgestellten Ausführungsbeispiel aus Glas und ist ringförmig ausgestaltet. Sie weist naturgemäß zwei Stirnflächen auf, wobei auf einer der Stirnflächen eine Winkelskalierung aufgebracht ist. Die Winkelskalierung kann beispielsweise als eine inkrementale Teilung mit radial orientierten Skalenstrichen ausgestaltet sein, wobei jedoch zusätzlich oder alternativ auch ein absoluter Code vorgesehen sein kann.

An der Welle 1.11 ist ein Mitnehmer 1.12 klemmend verdrehsicher befestigt, so dass bei Bewegung des Mitnehmers 1.12 eine Schwenkbewegung der Welle 1.11 erzeugt werden kann. Der Mitnehmer 1.12 kann der ersten Bauteilgruppe 1.1 zugeordnet werden. Am Mitnehmer 1.12 ist ein Bauelement 1.13 präzise festgelegt, welches als Festkörpergelenk dient und entsprechend biegeweich ausgestaltet ist. Insbesondere kann das Bauelement 1.13 als ein dünnwandiges Stahlplättchen ausgestaltet sein.

Die Welle 1.11 ist gemäß der Figur 4 innerhalb eines Körpers 1.25, welcher der zweiten Bauteilgruppe 1.2 zuzuordnen ist, durch zwei Wälzlager 1.3 drehbar gelagert. Weiterhin der zweiten Bauteilgruppe 1.2 zuzuordnen ist eine in den Figuren nicht dargestellte Lichtquelle, die beispielsweise eine LED und eine Kollimatorlinse umfasst, so dass durch die Lichtquelle kollimiertes Licht emittiert wird. Dieses Licht tritt durch die Maßverkörperung 1.14 bzw. deren Winkelskalierung hindurch und wird entsprechend der Winkelstellung zwischen der ersten Bauteilgruppe 1.1 und der zweiten Bauteilgruppe 1.2 beziehungsweise der Welle 1.11 und dem Körper 1.25 moduliert. Das modulierte Licht wird von einer Abtasteinrichtung 1.26, welche am Körper 1.25 befestigt ist, abgetastet. Entsprechende lichtempfindliche beziehungsweise photosensitive Detektoren befinden sich auf der als bestückte Leiterplatte ausgestalteten Abtasteinrichtung 1.26. Unter anderem umfasst die Abtasteinrichtung 1.26 auch elektronische Bauelemente zur Signalformung - beispielsweise zur Verstärkung und Digitalisierung - der von den Detektoren gelieferten Abtastsignale.

Um die Abtasteinrichtung 1.26 herum ist ein Gehäuse 1.21 montiert, so dass unter anderem die Lichtquelle, die Maßverkörperung 1.14 und die Abtasteinrichtung 1.26 gegenüber Umwelteinflüssen geschützt sind. Am Körper 1.25 ist ein Halter 1.22 befestigt. Dieser Halter 1.22 weist eine zweite Klebefläche 1.225 auf (siehe Figur 1) zum dauerhaften verkleben des Halters 1.22 mit dem Rotorblatt 3. Zudem sind am Halter 1.22 erste Montageelemente 1.221 befestigt. Im vorgestellten Ausführungsbeispiel sind die ersten Montageelemente 1.221 als Klettelemente ausgestaltet und mit Hilfe einer Kleberschicht 1.223 (Figur 5) mit dem Halter 1.22 fest verbunden.

An jeweils einem ersten Montageelement 1.221 ist jeweils ein zweites Montageelement 1.222 lösbar befestigt. Im vorgestellten Ausführungsbeispiel sind die zweiten Montageelemente 1.222 ebenfalls als Klettelemente ausgestaltet, so dass die ersten Montageelemente 1.221 mit den zweiten Montageelementen 1.222 jeweils durch eine Klettverbindung zusammengefügt sind. Die zweiten Montageelemente 1.222 weisen an den von den ersten Montageelementen 1.221 abgewandten Oberflächen eine Kleberschicht K auf. Beim Transport der Vorrichtung zur Erfassung von Verformungen eines Rotorblatts 3 sind auf diesen Oberflächen zum Schutz der Kleberschicht K Schutzfolien angeordnet.

Über ein in den Figuren nicht gezeigtes Anschlusskabel, welches an einer Buchse 1.24 angeschlossen wird, wird eine elektrische Verbindung zwischen der Positionsmesseinrichtung 1 und einer Folgeelektronik hergestellt, so dass elektrische Signale und elektrische Energie zwischen der Folgeelektronik und der Positionsmesseinrichtung 1 übertragen werden können.

Durch die Positionsmesseinrichtung 1 kann also die relative Winkelstellung zwischen der ersten Bauteilgruppe 1.1 und der zweiten Bauteilgruppe 1.2 beziehungsweise zwischen der Welle 1.11 und dem Körper 1.25 bestimmt werden. Derartige Positionsmesseinrichtungen 1 werden auch häufig als Drehgeber bezeichnet.

Neben der Positionsmesseinrichtung 1 umfasst die Vorrichtung zur Erfassung von Verformungen den Arm 2. Dieser ist im vorgestellten Ausführungsbeispiel aus glasfaserverstärktem Kunststoff hergestellt und weist eine erste Klebefläche 2.5 (siehe Figur 1) und eine zweite Verbindungsstelle 2.6 auf. Die zweite Verbindungsstelle 2.6 ist im Ausführungsbeispiel eine Anschlagfläche, an die das Bauelement 1.13, beispielsweise durch Schraubverbindungen, montiert wird.

Die erste Klebefläche 2.5 des Arms 2 ist zum dauerhaften Verkleben des Arms 2 mit dem Rotorblatt 3 ausgebildet. Ferner sind am Arm 2 erste Montageelemente 2.1 befestigt. Im vorgestellten Ausführungsbeispiel sind die ersten Montageelemente 2.1 als Klettelemente ausgestaltet. Mit Hilfe einer Kleberschicht (analog zur Befestigung der ersten Montageelemente 1.221 am Halter 1.22) sind auch die ersten Montageelemente 2.1 des Arms 2 mit dem Arm 2 fest verbunden.

An jeweils einem ersten Montageelement 2.1 des Arms 2 ist jeweils ein zweites Montageelement 2.2 des Arms 2 lösbar befestigt. Im vorgestellten Ausführungsbeispiel sind die zweiten Montageelemente 2.2 des Arms 2 ebenfalls als Klettelemente ausgestaltet, so dass die ersten Montageelemente 2.1 mit den zweiten Montageelementen 2.2 jeweils durch eine Klettverbindung zusammengefügt sind. Die zweiten Montageelemente 2.2 des Arms 2 weisen an den von den ersten Montageelementen 2.1 abgewandten Oberflächen eine Kleberschicht K auf. Beim Transport der Vorrichtung zur Erfassung von Verformungen eines Rotorblatts 3 sind auf diesen Oberflächen zum Schutz der Kleberschicht K Schutzfolien angeordnet.

Das Rotorblatt 3 ist wie der Arm 2 aus glasfaserverstärktem Kunststoff hergestellt.

Im Zuge der Montage der Vorrichtung zur Erfassung von Verformungen eines Rotorblatts 3 einer Windkraftanlage werden zunächst die Schutzfolien der zweiten Montageelemente 1.222, 2.2 abgezogen, so dass die mit der Kleberschicht K versehenen Oberflächen der zweiten Montageelemente 1.222, 2.2 freigelegt sind. Diese Montagephase ist in der Figur 1 gezeigt. Dann wird die Vorrichtung auf die entsprechend vorbereitete Oberfläche an der Wurzel des Rotorblatts 3 aufgesetzt, so dass die zweiten Montageelemente 1.222, 2.2 an der Oberfläche des Rotorblatts 3 kleben.

Als nächstes wird dann die Vorrichtung vom Rotorblatt 3 in der Weise entfernt, dass die zweiten Montageelemente 1.222, 2.2 an der Oberfläche des Rotorblatts 3 kleben bleiben, während die zweiten Montageelemente 1.222, 2.2 von den ersten Montageelementen 1.221, 2.1 getrennt werden. Insbesondere werden demnach im vorgestellten Ausführungsbeispiel die Klettverbindungen zwischen den zweiten Montageelementen 1.222, 2.2 und den ersten Montageelementen 1.221, 2.1 gelöst. Die Haltekräfte, welche durch die Klebeschichten K erzeugt werden sind also so groß, dass ein Lösen beziehungsweise Abziehen der Klettverbindung ohne ein Ablösen der zweiten Montageelemente 1.222, 2.2 vom Rotorblatt 3 möglich ist.

Nun kann die Vorrichtung, bestehend aus der Positionsmesseinrichtung 1 samt Halter 1.22 sowie dem Arm 2, abgelegt werden. Als nächstes wird auf die erste und die zweite Klebefläche 2.5, 1.225 (jeweils zwischen die ersten Montageelemente 1.221, 2.1) Kleber aufgetragen, hier ein ZweiKomponenten-Kleber, so dass Klebeschichten 4 und 5 entstehen. Um eine für die Messzwecke erforderliche Qualität der Klebung zu erreichen, ist es notwendig den Kleber ganzflächig und blasenfrei zu applizieren.

Darauffolgend werden gemäß der Figur 2 die ersten Montageelemente 1.221, 2.1 mit den zweiten Montageelementen 1.222, 2.2 verbunden, so dass die Vorrichtung zur Erfassung von Verformungen in einer endgültigen Lage relativ zum Rotorblatt 3 gebracht ist. Die Vorrichtung zur Erfassung von Verformungen wird durch die Haltekräfte der Montageelemente 1.222, 2.2, hier durch die Klettverbindungen, gehalten, auch wenn die Vorrichtung über-Kopf montiert wird. Der Kleber in den Klebeschichten 4, 5 kann ohne weiteres Zutun des Monteurs aushärten. Weitere Aktionen sind nach diesem Montageschritt nicht mehr erforderlich, zumal schon vor dem Aushärten der Klebeschichten 4, 5 unverschiebbare Verbindungen zwischen dem Halter 1.22 und dem Rotorblatt 3 sowie zwischen dem Arm 2 und dem Rotorblatt 3 nach der ersten und zweiten Montageelemente 2.1, 1.221, 2.2, 1.222 vorliegen.

Zudem sind der Halter 1.22, die Kleberschichten 1.223, die ersten und zweiten Montagelemente 1.221, 1.222 inklusive der Klebeschichten K so bemessen, dass eine exakte vorbestimmte Dicke Z der Klebeschichten 4 nach dem Zusammenfügen der ersten und zweiten Montagelemente 1.221, 1.222 hergestellt ist (siehe Figur 5). Der gleiche Sachverhalt gilt auch für die Ausgestaltung des Arms 2 mit seinen ersten und zweiten Montageelementen 2.1, 2.2 im Hinblick auf die Klebeschicht 5. Somit ist durch die Erfindung auf einfache Weise reproduzierbar eine exakte Dicke Z der Klebeschichten 4, 5 erreichbar, unabhängig von der vorliegenden Montagelage der Vorrichtung.

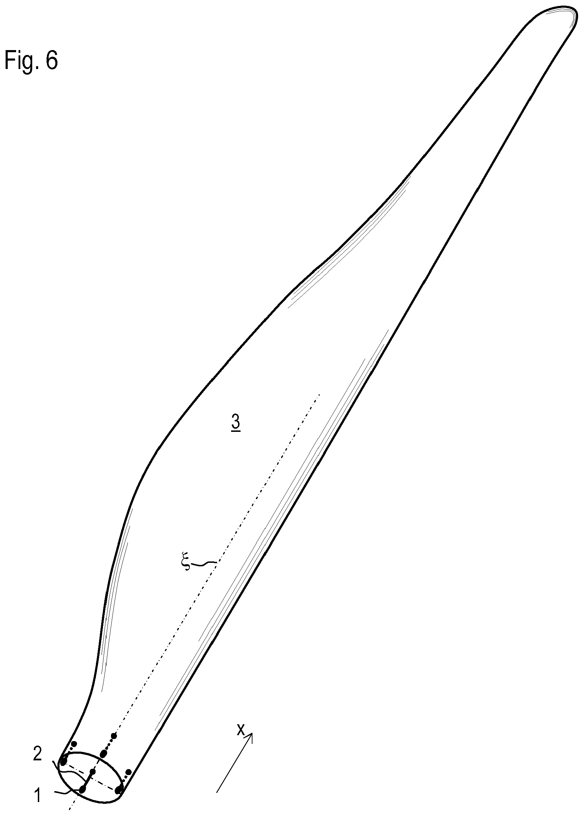

Der Arm 2 ist nach erfolgter Montage so orientiert, dass dieser in x-Richtung verläuft, wobei die x-Richtung im Wesentlichen der Längsachse ξ (Figur 6) des Rotorblatts 3 entspricht. Somit ist also die erste Verbindungsstelle des Arms 2, hier also die erste Klebefläche 2.5, in einem Abstand X zur zweiten Klebefläche 1.225 der zweiten Bauteilgruppe 1.2 angeordnet, wobei der Abstand X orthogonal zur Achse A orientiert ist. Der Arm 2 ist bezogen auf die Achse A in radialem Abstand R mechanisch, insbesondere gelenkig, mit der Positionsmesseinrichtung 1 gekoppelt. Auf diese Weise kann durch eine Veränderung des Abstandes X, beispielsweise durch eine Dehnung oder durch eine Kontraktion des Rotorblatts 3 eine relative Schwenkbewegung zwischen der ersten und der zweiten Bauteilgruppe 1.1, 1.2 erzeugt werden.

Durch die Ausgestaltung des Bauelements 1.13 als ein dünnwandiges Stahlplättchen können Biegemomente in der Vorrichtung reduziert werden, ohne die Messgenauigkeit ungünstig zu beeinflussen. Das Bauelement 1.13 ist so dimensioniert, dass dessen Biegeweichheit mit dem erforderlichen Dreh- beziehungsweise Widerstandsmoment der Positionsmesseinrichtung abgestimmt ist.

Um eine Aussage über die Verformung des Rotorblatts 3 in allen Dimensionen treffen zu können ist es vorteilhaft, wenn mehrere , z.B. vier, derartige Vorrichtungen zur Erfassung von Verformungen in der Wurzel des Rotorblatts 3 montiert werden, wie in der Figur 6 dargestellt. Die vier Vorrichtungen zur Erfassung von Verformungen sind, vorzugsweise in den vier Hauptbiegerichtungen, über den Umfang der Wurzel eines Rotorblatts 3 jeweils um 90° versetzt angeordnet.

Durch das erfindungsgemäße Verfahren und die Vorrichtung ist es möglich Rotorblätter mit einer Vorrichtung zur Erfassung von Verformungen auf einfache Weise nachzurüsten. Um die Verformungen verlässlich und genau bestimmen zu können, ist es wichtig, dass die Vorrichtungen sorgfältig am Rotorblatt 3 verklebt werden. Mit der Erfindung können entsprechende Vorrichtungen auch bei beengten Platzverhältnissen und schwierigen Montagelagen (bis zur Über-Kopf-Montage) vergleichsweise einfach präzise verklebt werden.

Im Betrieb der Windkraftanlage werden die Rotorblätter 3 durch ihr Eigengewicht und durch aerodynamische Lasten verformt. Insbesondere führen die Lasten zu Dehnungen oder Stauchungen des Rotorblatts 3 in x-Richtung. Entsprechend verändert sich der Abstand zwischen der zweiten Klebefläche 1.225 und der ersten Klebefläche 2.5. Wenn der Abstand X etwa 500 mm beträgt, ändert sich der Abstand zwischen der ersten und zweiten Klebefläche 2.5, 1.225 bei üblichen Belastungen um etwa 0,5 mm. Bei einer Dimensionierung von R mit etwa 30 mm führt dies zu einer Schwenkbewegung zwischen der ersten Bauteilgruppe 1.1 und der zweiten Bauteilgruppe 1.2 von etwa 1°. Die oben beschriebene Positionsmesseinrichtung 1, die nach einem präzisen optischen Prinzip arbeitet, hat beispielsweise eine Auflösung von 25 Bit für eine Umdrehung (360°), dies entspricht mit den genannten geometrischen Randbedingungen einer Auflösung von 5,6 nm bezogen auf die Längenänderungen des Abstands X zwischen der ersten Klebefläche 2.5 und der zweiten Klebefläche 1.225.

Die Vorrichtung zur Erfassung von Verformungen eines Rotorblatts 3 ist naturgemäß in einer Windkraftanlage großen Temperaturschwankungen ausgesetzt. Dennoch können durch die oben dargelegte Vorrichtung zur Erfassung von Verformungen überaus hohe Messgenauigkeiten auch unter diesen widrigen Umgebungsbedingungen erreicht werden. Dies liegt zum einen daran, dass durch die Erfassung von Winkellagen die thermische Ausdehnung der Maßverkörperung 1.14 kaum eine Rolle spielt (die Abstände zwischen den Skalierungsstrichen und deren Breite variieren mit der Temperatur, jedoch nicht die Winkellage). Zum anderen sind der Arm 2 und das Rotorblatt 3 aus dem gleichen Material hergestellt, so dass beide dasselbe thermische Ausdehnungsverhalten aufweisen. Schließlich kann durch das topfförmige elektrisch leitende Gehäuse 1.21 ein optimaler Schutz, insbesondere für die Abtasteinrichtung 1.26 und zugehöriger Elektronik, vor Überspannungen z. B. bei Gewittern gewährleistet werden.

Die über die Buchse 1.24 abgebbaren Signale sind vorteilhafterweise voll digital, so dass die oben genannte Folgeelektronik die Signale sämtlicher Vorrichtungen zur Erfassung von Verformungen der Rotorblätter ohne weitere Digitalisierung verarbeiten kann. Dies gewährleistet einerseits eine gegenüber äußeren Störungen sichere Signalübertragung, zum anderen können die Signale vergleichsweise einfach verarbeitet werden, so dass die gemessenen Verformungen in einem Regelkreis, z. B., zur (separaten) Regelung des Pitch-Winkels für jedes Rotorblatt 3 verwendet werden können.

## Patentansprüche

1. Vorrichtung zur Erfassung von Verformungen eines Rotorblatts (3) einer Windkraftanlage, umfassend
- eine Positionsmesseinrichtung (1), welche eine erste und eine zweite Bauteilgruppe (1.1, 1.2) aufweist, wobei die erste Bauteilgruppe (1.1) relativ zur zweiten Bauteilgruppe (1.2) bewegbar angeordnet ist und durch die Positionsmesseinrichtung (1) die relative Position zwischen der ersten und der zweiten Bauteilgruppe (1.1, 1.2) messbar ist,
- einen Arm (2), welcher mechanisch mit der ersten Bauteilgruppe (1.1) gekoppelt ist und eine erste Klebefläche (2.5) aufweist, die derart ausgestaltet ist, dass der Arm (2) an dieser mit dem Rotorblatt (3) dauerhaft verbindbar ist, wobei
die zweite Bauteilgruppe (1.2) eine zweite Klebefläche (1.225) aufweist, die so ausgestaltet ist, dass die zweite Bauteilgruppe (1.2) mit dem Rotorblatt (3) dauerhaft verbindbar ist, **dadurch gekennzeichnet, dass**
die Vorrichtung weiterhin mindestens ein Paar von Montagelementen (1.221, 2.1, 1.222, 2.2) aufweist, welches ein erstes Montageelement (1.221, 2.1) und ein zweites Montageelement (1.222, 2.2) umfasst, wobei
das erste Montageelement (1.221, 2.1) lösbar mit dem zweiten Montageelement (1.222, 2.2) verbunden ist sowie an der zweiten Bauteilgruppe (1.2) und am mit der ersten Bauteilgruppe (1.1) gekoppelten Arm (2) fixiert ist, und
das zweite Montageelement (1.222, 2.2) so ausgestaltet ist, dass dieses am Rotorblatt (3) haftend befestigbar ist.

2. Vorrichtung gemäß dem Anspruch 1, wobei das zweite Montageelement (1.222, 2.2) eine Klebeschicht (K) aufweist, so dass dieses am Rotorblatt (3) haftend befestigbar ist.

3. Vorrichtung gemäß einem der vorhergehenden Ansprüche, wobei das erste Montageelement (1.221, 2.1) durch einen Klettmechanismus lösbar mit dem zweiten Montageelement (1.222, 2.2) verbindbar ist.

4. Vorrichtung gemäß einem der vorhergehenden Ansprüche, wobei die erste Bauteilgruppe (1.1) relativ zur zweiten Bauteilgruppe (1.2) um eine Achse (A) schwenkbar angeordnet ist und durch die Positionsmesseinrichtung (1) die relative Winkellage zwischen der ersten und der zweiten Bauteilgruppe (1.1, 1.2) messbar ist und
die erste Klebefläche (2.5) in einem Abstand (X) zur zweiten Klebefläche (1.125) angeordnet ist,
der Arm (2) in radialem Abstand (R) mechanisch mit der ersten Bauteilgruppe (1.1) gekoppelt ist, so dass bei Veränderung des Abstands (X) eine relative Schwenkbewegung zwischen der ersten und der zweiten Bauteilgruppe (1.1, 1.2) erzeugbar ist.

5. Vorrichtung gemäß einem der vorhergehenden Ansprüche, wobei die erste Bauteilgruppe (1.1) gelenkig mit dem Arm (2), insbesondere über ein biegeweiches Bauelement (1.13), verbunden ist.

6. Vorrichtung gemäß einem der vorhergehenden Ansprüche, wobei die Positionsmesseinrichtung (1) eine Maßverkörperung (1.14) und ein Element (1.26) zur Abtastung der Maßverkörperung (1.14) aufweist.

7. Vorrichtung gemäß dem Anspruch 6, wobei das Element (1.26) zur Abtastung der Maßverkörperung (1.14) photosensitiv ist.

8. Verfahren zur Montage einer Vorrichtung gemäß einem der vorhergehenden Ansprüche an dem Rotorblatt (3), mit folgenden Schritten,
- Befestigen des zweiten Montageelements (1.222, 2.2) an dem Rotorblatt (3),
- Aufbringen eines Klebers auf die erste und die zweite Klebefläche (1.225, 2.5),
- Befestigen der Vorrichtung am Rotorblatt (3) durch Zusammenfügen des ersten Montageelements (1.221, 2.1) mit dem zweiten Montageelement (1.222, 2.2), wobei der Kleber sowohl mit der ersten und der zweiten Klebefläche (1.225, 2.5) in Kontakt ist als auch mit dem Rotorblatt (3).

9. Verfahren gemäß dem Anspruch 8, wobei das zweite Montageelement (1.122, 2.2) eine Klebeschicht (K) aufweist, so dass dieses am Rotorblatt (3) haftend befestigbar ist und vor dem Befestigen des zweiten Montageelements (1.222, 2.2) an dem Rotorblatt (3) das zweite Montageelement (1.222, 2.2) lösbar mit dem erstem ersten Montageelement (1.221, 2.1) verbunden ist, wobei vor dem Aufbringen des Klebers
- die Vorrichtung an das Rotorblatt (3) gedrückt wird, so dass das zweite Montageelement (1.122, 2.2) am Rotorblatt (3) haftet,
- die Vorrichtung zum darauffolgenden Aufbringen des Klebers vom Rotorblatt (3) wieder entfernt wird.

## Claims

1. A device for detecting deformations of a rotor blade (3) of a wind turbine generator system, comprising:
- a position-measuring device (1) comprising a first and a second assembly (1.1, 1.2), wherein the first assembly (1.1) is disposed so as to be movable relative to the second assembly (1.2) and the relative position between the first and the second assemblies (1.1, 1.2) can be measured by the position-measuring device (1),
- an arm (2) which is mechanically coupled to the first assembly (1.1) and has a first adhesive bonding surface (2.5) which is configured in such a manner that the arm (2) can be permanently joined to the rotor blade (3) at said first adhesive bonding surface, wherein
the second assembly (1.2) has a second adhesive bonding surface (1.225) which is configured in such a manner that the second assembly (1.2) can be permanently joined to the rotor blade (3), **characterized in that** the device furthermore has at least one pair of mounting elements (1.221. 2.1, 1.222, 2.2) which comprises a first mounting element (1.221, 2.1) and a second mounting element (1.222, 2.2), wherein the first mounting element (1.221, 2.1) is connected detachably to the second mounting element (1.222, 2.2) and is fixed on the second assembly (1.2) and on the arm (2) coupled to the first assembly (1.1) and the second mounting element (1.222, 2.2) is configured so that this can be adhesively attached to the rotor blade (3).

2. The device according to claim 1, wherein the second mounting element (1.222, 2.2) has an adhesive layer (K) so that this can be adhesively attached to the rotor blade (3).

3. The device according to any one of the preceding claims, wherein the first mounting element (1.221. 2.1) is detachably joinable to the second mounting element (1.222, 2.2) by a hook and loop mechanism.

4. The device according to any one of the preceding claims, wherein the first assembly (1.1) is disposed so as to be pivotable relative to the second assembly (1.2) about an axis (A) and the relative angular position between the first and second assemblies (1.1, 1.2) can be measured by the position-measuring device (1) and the first adhesive bonding surface (2.5) is disposed at a distance (X) from the second adhesive bonding surface (1.125) and the arm (2) is mechanically coupled to the first assembly (1.1) at a radial distance (R) such that a relative pivoting movement can be produced between the first and second assemblies (1.1, 1.2) when the distance (X) varies.

5. The device according to any one of the preceding claims, wherein the first assembly (1.1) is connected in an articulated manner to the arm (2), in particular via a flexible component (1.13).

6. The device according to any one of the preceding claims, wherein the position-measuring device (1) comprises a measuring standard (1.14) and an element (1.26) for scanning the measuring standard (1.14).

7. The device according to claim 6, wherein the element (1.26) for scanning the measuring standard (1.14) is photosensitive.

8. A method for assembling a device according to any one of the preceding claims on the rotor blade (3) comprising the following steps:
- fastening the second mounting element (1.222, 2.2) on the rotor blade (3),
- applying an adhesive to the first and the second adhesive bonding surface (1.225, 2.5),
- fastening the device on the rotor blade (3) by joining the first mounting element (1.221, 2.1) to the second mounting element (1.222, 2.2), wherein the adhesive is in contact both with the first and the second adhesive bonding surface (1.225, 2.5) and also with the rotor blade (3).

9. The method according to claim 8, wherein the second mounting element (1.122, 2.2) has an adhesive layer (K) so that this can be fastened adhesively on the rotor blade (3) and before fastening the second mounting element (1.222, 2.2) on the rotor blade (3), the second mounting element (1.222, 2.2) is connected detachably to the first mounting element (1.221, 2.1) wherein before application of the adhesive
- the device is pressed onto the rotor blade (3) so that the second mounting element (1.122, 2.2) adheres to the rotor blade (3)
- the device is removed from the rotor blade (3) again for subsequent application of adhesive.

## Revendications

1. Dispositif pour la détection de déformations d'une pale de rotor (3) d'une éolienne, comprenant :
un dispositif de mesure de position (1) qui présente un premier et un deuxième groupe de composants (1.1, 1.2), le premier groupe de composants (1.1) étant disposé de manière déplaçable par rapport au deuxième groupe de composants (1.2) et le dispositif de mesure de position (1) permettant de mesurer la position relative entre le premier et le deuxième groupe de composants (1.1, 1.2),
un bras (2) qui est accouplé mécaniquement au premier groupe de composants (1.1) et qui présente une première surface adhésive (2.5) qui est configurée de telle sorte que le bras (2) puisse être raccordé de manière permanente à celle-ci avec la pale de rotor (3),
le deuxième groupe de composants (1.2) présentant une deuxième surface adhésive (1.225) qui est configurée de telle sorte que le deuxième groupe de composants (1.2) puisse être raccordé de manière permanente à la pale de rotor (3), **caractérisé en ce que**
le dispositif présente en outre au moins une paire d'éléments de montage (1.221, 2.1, 1.222, 2.2) qui comprend un premier élément de montage (1.221, 2.1) et un deuxième élément de montage (1.222, 2.2), le premier élément de montage (1.221, 2.1) étant raccordé de manière amovible au deuxième élément de montage (1.222, 2.2) et étant fixé au deuxième groupe de composants (1.2) et au bras (2) accouplé au premier groupe de composants (1.1), et le deuxième élément de montage (1.222, 2.2) étant configuré de telle sorte qu'il puisse être fixé par adhésion à la pale de rotor (3).

2. Dispositif selon la revendication 1, dans lequel le deuxième élément de montage (1.222, 2.2) présente une couche adhésive (K) de telle sorte que celui-ci puisse être fixé par adhésion à la pale de rotor (3).

3. Dispositif selon l'une quelconque des revendications précédentes, dans lequel le premier élément de montage (1.221, 2.1) peut être raccordé de manière amovible au deuxième élément de montage (1.222, 2.2) par un mécanisme de type velcro.

4. Dispositif selon l'une quelconque des revendications précédentes, dans lequel le premier groupe de composants (1.1) est disposé de manière à pouvoir pivoter par rapport au deuxième groupe de composants (1.2) autour d'un axe (A) et le dispositif de mesure de position (1) permet de mesurer la position angulaire relative entre le premier et le deuxième groupe de composants (1.1, 1.2) et
la première surface adhésive (2.5) est disposée à une distance (X) de la deuxième surface adhésive (1.125),
le bras (2) est accouplé mécaniquement à distance radiale (R) au premier groupe de composants (1.1) de telle sorte que lors d'une variation de la distance (X), un mouvement de pivotement relatif entre le premier et le deuxième groupe de composants (1.1, 1.2) puisse avoir lieu.

5. Dispositif selon l'une quelconque des revendications précédentes, dans lequel le premier groupe de composants (1.1) est raccordé de manière articulée au bras (2), notamment par le biais d'un élément de structure flexible élastique (1.13).

6. Dispositif selon l'une quelconque des revendications précédentes, dans lequel le dispositif de mesure de position (1) présente une mesure matérialisée (1.14) et un élément (1.26) pour la détection de la mesure matérialisée (1.14).

7. Dispositif selon la revendication 6, dans lequel l'élément (1.26) pour la détection de la mesure matérialisée (1.14) est photosensible.

8. Procédé de montage d'un dispositif selon l'une quelconque des revendications précédentes sur la pale de rotor (3), comprenant les étapes suivantes :
- fixation du deuxième élément de montage (1.222, 2.2) sur la pale de rotor (3),
- application d'un adhésif sur la première et la deuxième surface adhésive (1.225, 2.5),
- fixation du dispositif sur la pale de rotor (3) par assemblage du premier élément de montage (1.221, 2.1) au deuxième élément de montage (1.222, 2.2), l'adhésif étant à la fois en contact avec la première et la deuxième surface adhésive (1.225, 2.5) et avec la pale de rotor (3).

9. Procédé selon la revendication 8, dans lequel le deuxième élément de montage (1.122, 2.2) présente une couche adhésive (K) de telle sorte que celui-ci puisse être fixé par adhésion à la pale de rotor (3), et avant la fixation du deuxième élément de montage (1.222, 2.2) à la pale de rotor (3), le deuxième élément de montage (1.222, 2.2) est raccordé de manière amovible au premier élément de montage (1.221, 2.1), et avant l'application de l'adhésif :
- le dispositif est pressé contre la pale de rotor (3) de telle sorte que le deuxième élément de montage (1.122, 2.2) adhère à la pale de rotor (3),
- et le dispositif est ensuite à nouveau enlevé de la pale de rotor (3) pour l'application subséquente de l'adhésif.
